(19) Europäisches Patentamt
European Patent Office
Office européen des brevets

(11) **EP 3 746 908 B1**

(12) **EUROPEAN PATENT SPECIFICATION**

(45) Date of publication and mention
of the grant of the patent:
**06.03.2024 Bulletin 2024/10**

(21) Application number: **19705434.9**

(22) Date of filing: **25.01.2019**

(51) International Patent Classification (IPC):
**G06F 16/2452** (2019.01)     **G06F 16/901** (2019.01)

(52) Cooperative Patent Classification (CPC):
**G06F 16/2452; G06F 16/9024**

(86) International application number:
**PCT/US2019/015042**

(87) International publication number:
**WO 2019/152256 (08.08.2019 Gazette 2019/32)**

(54) **TRANSLATING FUNCTIONAL GRAPH TRAVERSAL LANGUAGE TO EXTENDED STRUCTURED QUERY LANGUAGE**

ÜBERSETZUNG VON FUNKTIONSGRAPHTRAVERSASLPRACHE IN ERWEITERTE STRUKTURIERTE ABFRAGESPRACHE

TRADUCTION D'UN LANGAGE TRANSVERSAL DE GRAPHE FONCTIONNEL EN UN LANGAGE DE REQUÊTE STRUCTURÉE ÉTENDU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2018 CN 201810101533**

(43) Date of publication of application:
**09.12.2020 Bulletin 2020/50**

(73) Proprietor: **Microsoft Technology Licensing, LLC Redmond, WA 98052-6399 (US)**

(72) Inventors:
• **CHEN, Liang**
**Redmond, WA 98052-6399 (US)**
• **MOSCIBRODA, Thomas**
**Redmond, WA 98052-6399 (US)**
• **THOTA, Shireesh K.**
**Redmond, WA 98052-6399 (US)**
• **MONDAL, Jayanta**
**Redmond, WA 98052-6399 (US)**
• **PREDESCU, Adrian I.**
**Redmond, WA 98052-6399 (US)**
• **TOWERS, Oliver D.**
**Redmond, WA 98052-6399 (US)**

(74) Representative: **CMS Cameron McKenna Nabarro Olswang LLP**
**Cannon Place**
**78 Cannon Street**
**London EC4N 6AF (GB)**

(56) References cited:
**WO-A1-2016/095216     US-A1- 2016 342 709**

• **WEN SUN ET AL: "SQLGraph : An Efficient Relational-Based Property Graph Store", PROCEEDINGS OF THE 2015 ACM SIGMOD INTERNATIONAL CONFERENCE ON MANAGEMENT OF DATA, SIGMOD '15, 1 January 2015 (2015-01-01), pages 1887-1901, XP055462361, New York, New York, USA DOI: 10.1145/2723372.2723732 ISBN: 978-1-4503-2758-9**
• **RENZO ANGLES ET AL: "G-CORE: A Core for Future Graph Query Languages", ARXIV.ORG, CORNELL UNIVERSITY LIBRARY, 201 OLIN LIBRARY CORNELL UNIVERSITY ITHACA, NY 14853, 5 December 2017 (2017-12-05), XP080844788,**

**Description**

**BACKGROUND**

A functional graph traversal language is a functional language for traversing a graph database and comprises one or more functions or steps, each of which may input a object flow and output a new object flow. Graph database is a graph-oriented or graph-based database for storing data and querying data in the data structure of the graph. The basic storage unit of the graph database includes vertex, edge, property and so on. The process of graph traversal is to start from a vertex in the graph and access other nodes based on the property of the vertex or edge, thereby accomplishing query for the graph database.

Structured query language (SQL) is a declarative language designed for managing data in relational databases. It may use SQL query statements to retrieve, insert, update, and delete data from the database. The most common query in SQL is the SELECT statement which generally consists of SELECT-FROM-WHERE as well as some peripheral clauses, such as GROUP-BY, ORDER-BY, and HAVING. As a declarative language, SQL generally only needs to specify the tasks to be performed without specifying the implementations details of the tasks. Therefore, SQL statements usually do not have complex statement structure and syntax requirements.

US 2016/0342709 A1 describes methods, systems and computer program products for storing graph data for a directed graph in a relational database. Aspects include creating a plurality of relational tables for the graph data, using a processor on a computer, the plurality of relational tables including adjacency tables and attribute tables. Each row of the attribute tables is dedicated to a subject of the graph data in the dataset and stores a JavaScript Object Notation (JSON) object corresponding to the subject. Each row of the adjacency tables includes a hashtable containing properties and values of the subject for that row.

**SUMMARY**

According to aspects of the present invention there is provided a computer-implemented method, an electronic device and a computer program as defined in the accompanying claims.

In embodiments of the present disclosure, there is provided a scheme for translating a functional graph traversal language to extended Structured Query Language. After obtaining a first query compiled with THE functional graph traversal language, the first query is translated to a second query in the form of extended Structured Query Language based on translating rules so as to optimize the first query. By extending the standard Structured Query Language, embodiments of the present disclosure enable retaining directed edges between vertices in the graph database in the second query and retaining flow control, iteration, temporary variable definition, advanced data structure (array, dictionary, tree structure), side effect and dependency between steps included in the first query. Therefore, according to embodiments of the present disclosure, by translating the functional graph traversal language, it is possible to identify queries with the same semantics in the functional graph traversal language so as to optimize queries in the functional graph traversal language.

This Summary is provided to introduce a selection of concepts in a simplified form that are further described below in the Detailed Description. The invention is defined by the features of the independent claims. Further embodiments are the subject-matter of the dependent claims.

**BRIEF** DESCRIPTION OF THE DRAWINGS

With reference to the drawings and the detailed description below, the above and other features, aspects, and advantages of the embodiments of the present disclosure will become more apparent. In the drawings, the same or similar reference signs usually represent the same or similar components, in which:

Fig. 1 shows a block diagram of a computing device/server capable of implementing one or more embodiments of the present disclosure;
Fig. 2 shows a flowchart of a method for translating a functional graph traversal language into an extended Structured Query Language according to embodiments of the present disclosure;
Fig. 3 shows a schematic diagram of a portion of an illustrative graph database according to embodiments of the present disclosure;
Fig. 4 shows a schematic diagram for optimizing queries in functional graph traversal language according to embodiments of the present disclosure;
Fig. 5 shows a flowchart of a method for optimizing queries in functional graph traversal language according to embodiments of the present disclosure;
Fig. 6 shows a schematic diagram for translating dependency in functional graph traversal language according to embodiments of the present disclosure;

Fig. 7 shows a schematic diagram for translating a coalesce() step in functional graph traversal language according to embodiments of the present disclosure;

Fig. 8 shows a schematic diagram for translating an optional() step in functional graph traversal language according to embodiments of the present disclosure; and

Fig. 9 shows a schematic diagram of a process for translating functional graph traversal language into extended Structured Query Language using a finite-state machine according to embodiments of the present disclosure.

## DETAILED DESCRIPTION

The embodiments of the present disclosure will be described in details with reference to the drawings.

It is to be understood that the drawings and embodiments of the present disclosure are only for the purpose of illustration, rather than suggesting any limitations on the scope of the subject matter.

As used herein, the term "comprises/include" and its variants are to be read as open terms that mean "comprise/include, but is not limited to". The term "based on" is to be read as "based at least in part on". The term "one embodiment" and "an embodiment" are to be read as "at least one embodiment". The term "another embodiment" is to be read as "at least one other embodiment"; the term "some embodiments" is to be read as "at least some embodiments." Definitions related to other terms will be provided in the following description.

Traditionally, queries in the functional graph traversal language are generally consisted of one or more steps and the semantics of the queries is defined by the order of implementing the steps. However, implementing the steps in order limits the space of query optimization. Thus, it is generally impossible to identify queries with the same semantics in the functional graph traversal language. To identify queries with the same semantics in the functional graph traversal language, one improvement is to translate the functional graph traversal language to another standard declarative language, such as standard SQL. However, in the standard SQL, the directed edges between vertices in the graph database cannot be reflected, and moreover, standard SQL cannot support translation of some steps (such as the side effect step) in the functional graph traversal language. Therefore, the above improvement will ignore the translation of some query steps during the language translation process, and thus it is error-prone and fails to truly identify queries with the same semantics.

For this purpose, embodiments of the present disclosure provide a scheme for translating a functional graph traversal language into an extended Structured Query Language. In embodiments of the present disclosure, after a first query compiled with the functional graph traversal language is obtained, the first query is translated to a second query in the form of extended Structured Query Language based on a translating rule so as to optimize the first query. Therefore, in accordance with embodiments of the present disclosure, by translating the functional graph traversal language, it is possible to identify queries with the same semantics in the functional graph traversal language so as to optimize queries in the functional graph traversal language.

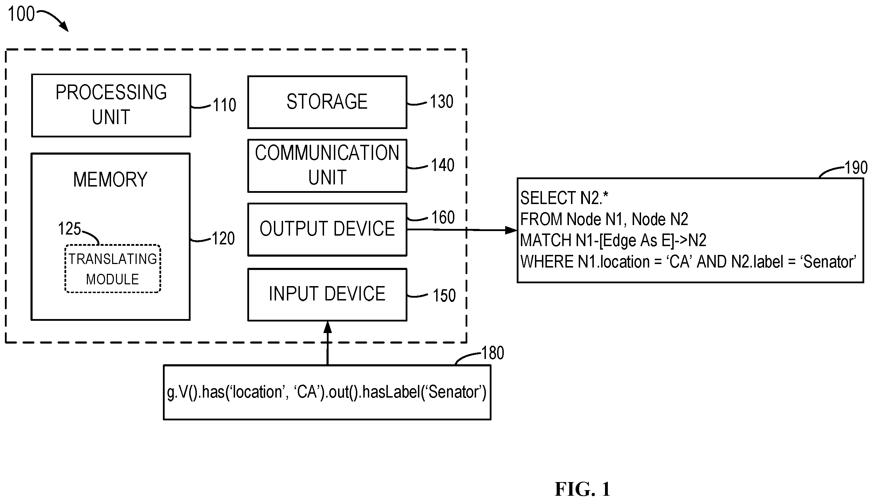

In addition, in accordance with embodiments of the present disclosure, after quires with the same semantics in the functional graph traversal language are identified, it is possible to select a query with the highest implementation efficiency for implementation, thereby improving the querying efficiency. Moreover, embodiments of the present disclosure support user-defined table-valued functions and enable reservation of flow control, iteration, temporary variable definition, advanced data structure (array, dictionary, tree structure), side effect and dependency between steps in the functional graph traversal language, so as to achieve fully-fidelity semantic translation for the functional graph traversal language. Basic principles and several embodiments of the present disclosure will be described below with reference to Figs. 1-9.

Fig. 1 is a block diagram illustrating a computing device/server 100 capable of implementing one or more embodiments of the present disclosure. It is to be understood that the computing device/server 100 shown in Fig. 1 is only illustrative, rather than to form any limit to the functions and scope of the embodiments described in the present disclosure.

As shown in Fig. 1, the computing device/server 100 is in the form of a universal computing device. The components of the computing device/server 100 may include, but not limited to, one or more processors or processing units 110, a memory 120, a storage device 130, one or more communication units 140, one or more input devices 150 and one or more output devices 160. The processing unit 110 may be a physical or virtual processor capable of performing various processing based on the instructions stored in the memory 120. In a multiprocessor system, multiple processing units may execute the computer-executable instructions in parallel to improve the parallel processing capability of the computing system/server 100.

The computing system/server 100 usually includes a plurality of computer storage media, which can be any available media accessible by the computing system/server 100, including but not limited to volatile and non-volatile media, and removable and non-removable media. The memory 120 can be a volatile memory (for example, a register, cache, Random Access Memory (RAM)), non-volatile memory (for example, a Read-Only Memory (ROM), Electrically Erasable Programmable Read-Only Memory (EEPROM), flash memory), or any combination thereof. The storage device 130, which may be removable or non-removable media, includes machine-readable media, such as flash memory drive, disk or any other media and may be used to store information and/or data, and can be accessed in the computing system/server 100.

The computing system/server 100 may further include additional removable/non-removable and volatile/non-volatile storage media. Although not illustrated in Fig. 1, it can provide a disk drive for reading from or writing into the removable and non-volatile disk (such as "floppy disk") and an optical disk drive for reading from or writing into the removable and non-volatile optical disk. In such case, each drive may be connected to the bus (not shown) via one or more data media interfaces. The memory 120 may include a translating module 125 having one or more program module assemblies which are configured to execute the language translation method or function of various implementations described herein.

The communication unit 140 communicates with other computing devices through communication media. Additionally, the functions of the components in the computing system/server 100 may be realized by a single computing cluster or a plurality of computing machines, and computing machines communicate through communication connections. Therefore, the computing system/server 100 may be operated in the networked environment through a logic link with one or more other servers, a networked personal computer (PC) or a further general network node.

The input device 150 may be one or more various input devices, such as a mouse, a keyboard and a trackball. The output device 160 may be one or more various output devices, such as a display, a loudspeaker and a printer. The computing device/server 100 may further communicate through the communication unit 140 as required with one or more external devices (not shown), such as a storage device, a display device and the like, one or more devices that enable the interaction between a user and the computing system/server 100 or any devices (such as a network card, a modem and the like) that enable the communication between the computing system/server 100 and one or more other computing devices. Such communication can be executed through an input/output (I/O) interface (not shown).

As shown in Fig. 1, the computing device/server 100 receives input from a first query 180 compiled with a functional graph traversal language (also referred to as "a source language") through an input device 150, and utilizes the translating module 125 to process the input. After the processing is accomplished, it is possible to generate output of a second query 190 in the form of extended SQL (also referred to as "target language") through an output device 160.

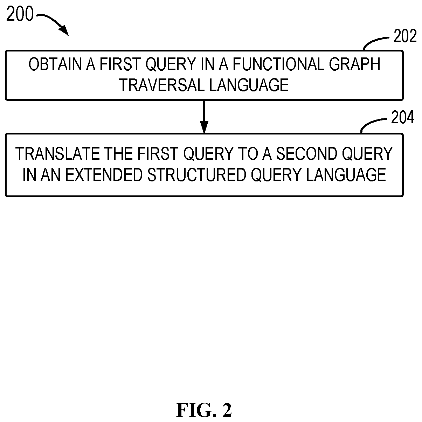

Those skilled in the art shall appreciate that although Fig. 1 illustrates receiving input through the input device 150 and providing output through the output device 160, it is also possible to obtain input and provide output through the communication unit 140. The scope of embodiments of the present disclosure is not limited by the manner of how to obtain source language query and how to provide target language query. Reference will be made to Figs. 2-9 below to depict in detail the example implementations of how the translating module 125 translates the functional graph traversal language to extended SQL.

Fig. 2 shows a flowchart of a method 200 for the translating functional graph traversal language to the extended Structured Query Language according to embodiments of the present disclosure. It is to be understood that method 200 may be executed by the computing device/server 100 as depicted with reference to Fig. 1.

At 202, a first query (also referred to as "a source language query") in the functional graph traversal language is obtained, and the first query relates to a directed edge depicting neighboring relation between vertices in a graph. The basic storage unit in the graph database includes vertices, edges and properties, and the vertices and the edges may have their respective properties. The traversal process of the graph generally starts from one vertex to another vertex through a directed edge. For example, referring to first query 180 in the example depicted in Fig. 1, g.v() represents a vertex in the graph, has('location', 'CA') indicates that the first vertex has the property that "location" is "CA," out() represents a directed edge from the first vertex to the second vertex in the graph, and hasLabel(' Senator') indicates that the second vertex has the label of "Senator." Thus, the first query 180 in the input involves not only the properties of the two vertices *per se,* but also the directed edge between the two vertices.

At 204, the first query is translated to a second query (also referred to as "a target language query") in extended structured query language (SQL) so as to optimize the first query, and the second query includes clauses describing the directed edge, such as MATCH clause. For example, the translating module 125 translates the source language query 180 in the input to the target language query 190 in the output through the translating rule. As shown in Fig. 1, the target language query includes a clause "MATCH N1-[Edge As E]->N2" describing a directed edge between vertices, which indicates that the source language query involves an directed edge from vertex N1 to vertex N2.

It is to be understood that as SQL is a declarative language for a relational database, FROM clause generally defines k reference tables, and WHERE clause specifies a Boolean expression. The result of the SELECT statement is the Cartesian product of tuples from *k* tables, while satisfying the Boolean expression in the WHERE clause. This Cartesian product is commutative and associative, and as a result, it is possible to rearrange the k tables when performing the Cartesian product using queries with the same semantics. This capability of rearranging is the important source of query optimization. In other words, standard SQL does not specify the specific steps of executing query which are instead constructed by the optimizer of an SQL engine. Thus, the optimization of the query may be achieved.

As the functional graph traversal language needs to formulate the specific steps specified by the query, it is impossible to identify queries with the same semantics therein. Therefore, translation of the functional graph traversal language can identify queries with the same semantics, thereby achieving optimization of the query. However, the standard SQL cannot cover all the steps in the functional graph traversal language, for example, the standard SQL neither includes corresponding clauses of directed edge(s) between vertices nor corresponding clauses of dependency relation between steps. In view of this, embodiments of the present disclosure extend standard SQL and can retain the directed edge between the vertices in the graph database in the second query so as to achieve full-fidelity semantic translation for the functional graph traversal language. Therefore, embodiments of the present disclosure can identify queries with the same semantics existing in the functional graph traversal language by completely translating the source language query to the target language query, thereby optimizing the first query.

It is to be understood by those skilled in the art that the functional graph traversal language is a functional language for traversing a graph database, and one typical example of functional graph traversal language is Gremlin language. As a functional and data-flow language, Gremlin consists of a set of combinable steps so that the user can express traversal or query of a complex property graph in a concise manner. For example, some graph databases (such as distributed graph database as a service) support Gremlin as query language and translate Gremlin to internal language (IL), compile internal language into computation operators, execute the operators and return the results. Each step in Gremlin injects a stream of objects as input and projects a new stream of objects as output. A Gremlin query is a sequence of steps, and the semantics of the query is defined by executing the steps one after another in the strict order as they are composed in the sequence. Obj ects produced by Gremlin have various types, including vertex, edge, scalar (such as integer, string and so on), and composite types (such as array and map).

In some embodiments, Gremlin objects may be implemented as Java objects and Gremlin steps are implemented as virtual functions of Java obj ects. In this implementation, a Gremlin query is directly mapped to a pipeline that carries a stream of Java objects. Every Gremlin step is a junction in the pipeline that pulls objects from the upstream, and for each of incoming objects, it invokes the virtual function of the corresponding step, produces zero or more objects and pushes them to the downstream. The objects produced by the last junction of the pipeline are the results of the Gremlin query.

It is to be understood that although embodiments of the present disclosure depict an example of translating the functional graph traversal language with reference to Gremlin as below, other functional graph traversal languages are also possible. The scope of embodiments of the present disclosure is not limited to Gremlin.

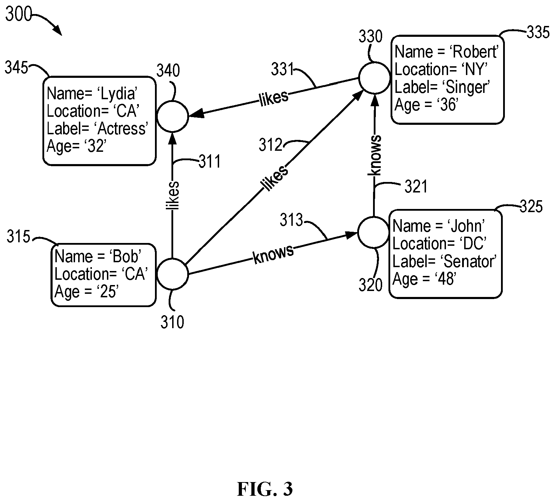

Fig. 3 is a schematic diagram of a portion of an illustrative graph database 300 according to embodiments of the present disclosure. As shown in Fig. 3, the graph database 300 includes vertices 300, 320, 330 and 340, each node has its respective properties. For example, the vertex 300 has a property 315 including properties of name, location and age, which means, for instance, a man named Bob who is 25 years old and lives in CA (California). The vertex 320 has a property 325 which further includes a label property, which may indicate that the identity of the person of the vertex 320 is "Senator." Besides, the vertex 330 has properties 335, and the vertex 340 has properties 345.

Continuing to refer to Fig. 3, the graph database 300 further includes directed edges between vertices. For instance, the directed edge 311 from the vertex 310 to the vertex 340 indicates that the person of the vertex 310 likes the person of the vertex 340, and the directed edge 314 from the vertex 310 to the vertex 320 indicates that the person of the vertex 310 knows the person of the vertex 320. Moreover, the graph database 300 further includes directed edge 312 from the vertex 310 to the vertex 330, directed edge 321 from the vertex 320 to the vertex 330, and directed edge 331 from the vertex 330 to the vertex 340. It is to be understood that although each edge in Fig. 3 only illustrates one property, such as "like" and "know," each edge may have multiple properties. Besides, it is to be understood that Fig. 3 only illustrates a portion of the graph database 300, and the graph database may further include a plurality of other nodes, edges and properties.

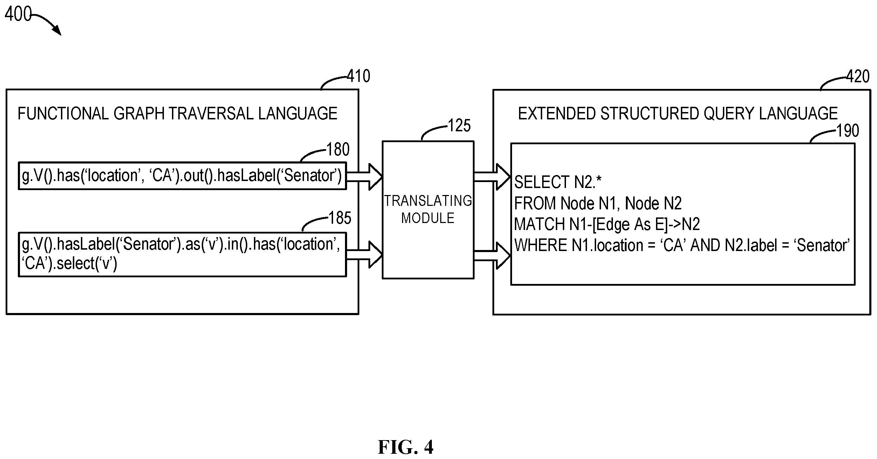

Fig. 4 shows a schematic diagram 400 for optimizing queries in functional graph traversal language according to embodiments of the present disclosure. As shown in Fig. 4, the translating module 125 is used to translate queries in functional graph traversal language 410 (such as Gremlin) to extended structured query language (SQL) 420.

As shown in Fig. 4, in some embodiments, during the process of translation from Gremlin query to extended SQL query, Gremlin queries are translated to SELECT statement in extended SQL. In SELECT statement, FROM clause defines one or more table references. In a relational database, each table reference points to a base table in the database which may be viewed as a declaration of a variable from the programming language perspective. The variable is bound to the table's records (or rows). In the graph database, there is only one base table node, and each row in node corresponds to a vertex. Hence, each reference of node in the FROM clause defines a new variable bound to all vertices. Node in the graph database differs from conventional tables in two aspects. First, Node has an infinite number of columns. A column of node corresponds to a vertex property. Since Gremlin adopts flexible schemas, vertices may have arbitrary properties. Second, Node has a special column * (star) which is a JSON representation of the full vertex. This column is reserved to support Gremlin steps that need the full vertex. For example, the values() step in Gremlin extracts property values from input elements. When a vertex is passed into it, the full representation of the vertex should be sent.

In some embodiments, it is possible to determine the number of columns output by the second query based on the SELECT statement in the second query. Though node conceptually has infinite columns, during query execution, only columns referenced in WHERE and SELECT clauses have practical meaning and should be populated in records. For example, for the query 180, even when the vertex shown in Fig. 3 has many properties, the query only involves "location" and "label." Therefore, the meaningful table representation in the query only has two columns, namely, location and label.

In embodiments of the present disclosure, a first extension of the standard SQL is MATCH clause which consists of one or more path expressions, each of which specifies a list of directed edges connecting two vertex variables defined in the FROM clause. A common pattern of an edge is in the following format:

$$[sourceAlias] - [Edge As\ edgeAlias] -> [sinkAlias],$$

Where sourceAlias and sinkAlias are optional but at least one of them must exist. From the SQL perspective, the edge variable also defines a table reference. Similar to node, this table has an infinite number of columns due to flexible schemas of edges and includes a special column * (star) for the JSON representation of edges. In addition, the edge table has several predefined columns: sourceId, sourceLabel, sinkId and sinkLabel.

In the extended SQL according to embodiments of the present disclosure, FROM and MATCH clauses altogether define vertex and edge variables and their topological relationships. The WHERE clause further makes additional constraints on the variables through Boolean expressions and the execution order of variables is determined by the query optimizer. In essence, the topological relationships describe a special type of join conditions. By adding and extending MATCH clause in standard SQL, it is possible to allow the optimizer to exploit graph semantics so as to find Gremlin queries having the same semantics. As shown in Fig. 4, in the extended SQL query, a MATCH clause "MATCH N1-[Edge As E]->N2" describing a directed edge between two nodes is added in the extended SQL query.

Continuing to refer to Fig. 4, the query 180 compiled with Gremlin means starting to traverse neighboring vertices with the label of "Senator" from the vertex located at CA; while the query 185 compiled with Gremlin means starting to traverse from the vertex having a label of "Senator" back to the vertex located at CA. Through analysis, queries 180 and 185 actually have the same semantics and output results while differ only in the order of graph traversal. In other words, queries 180 and 185 essentially embody two execution plans for the same graph query: find CA residents and Senators connected via one-hop edges. However, such equivalence is not established by Gremlin syntax or semantics, but by graph semantics: traversing from vertex A to vertex B is equivalent to counter-traversing from B to A via B's incoming edges.

Since data flow is directional and Gremlin itself does not specify equivalent compositions, it is impossible to identify equivalent execution plans of the same data flow and find an optimal one to execute at runtime. Therefore, the source language queries 180 and 185 in Gremlin are translated to the same target language query 190 of the extended SQL 420 by means of the translating module 125 according to embodiments of the present disclosure, so as to exploit SQL syntax/semantics to explicitly represent semantic equivalence in graphs, thereby optimizing source language query. In this manner, extended SQL forms the basis for query optimization and will be the input of the compiler that optimizes the query and produces execution operators to generate results. For example, as queries 180 and 185 have the same semantics, as long as one of them is executed, the output result of the two queries may be obtained, thereby improving the execution efficiency of Gremlin query.

Besides, query 185 is more efficient than query 180, because there are only 100 Senators in US and yet millions of CA residents. Starting from a much smaller vertex set reduces execution complexity and leads to higher query speed. Therefore, the execution efficiency of Gremlin query can be improved by using Gremlin to execute query 185 instead of query 180.

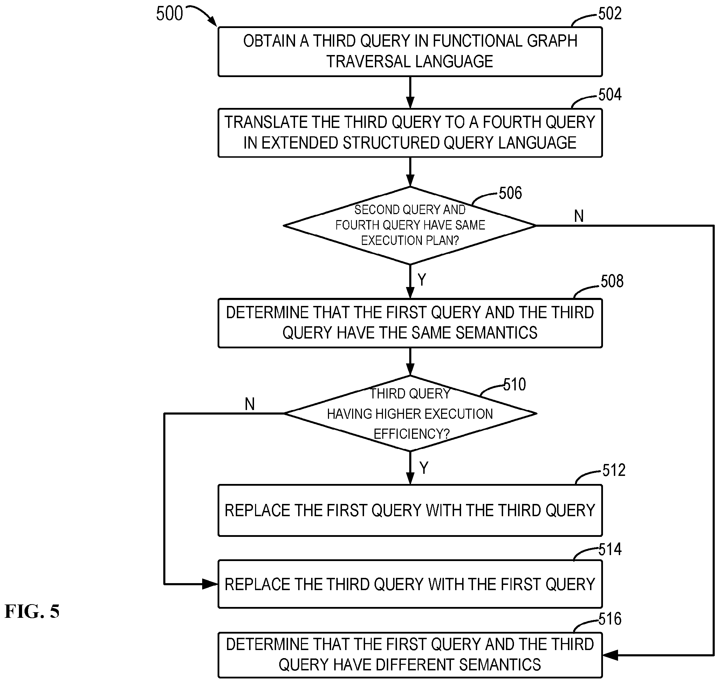

Fig. 5 shows a flowchart of a method 500 for optimizing queries in functional graph traversal language according to embodiments of the present disclosure. It is to be understood that method 500 may be executed by the computing device/server 100 shown in Fig. 1 and after the step 204 depicted in Fig. 2.

At 502, a third query in the functional graph traversal language is obtained. For example, a third query 185 compiled with Gremlin is obtained. At 504, the third query is translated to a fourth query in the form of extended SQL. For example, the translating module 125 translates the third query 185. At 506, it is determined whether the second query and the fourth query have the same execution plan. As extended SQL may find queries with the same semantics, it is possible to compare translated target language queries to identify the same source language queries.

If it is determined that the second query and the fourth query have the same execution plan, then at 508, it is determined that the first query and the third query have the same semantics. For example, in the example shown in Fig. 4, the first query 180 and the third query 185 are both translated to query 190 (namely, query 190 represents both the second query and the fourth query), then it indicates that the first query 180 and the third query 185 are substantially queries of the same semantics and their output results are also the same.

At 510, it is determined whether the execution efficiency of the third query is higher than that of the first query, and the execution efficiency may represent time costs and/or computation costs to execute the query. If it is determined that the execution efficiency of the third query is higher than that of the first query, at 512, the third query is used to replace the first query. For instance, in the example shown in Fig. 4, the query efficiency of third query 185 is higher than that of the first query 180, and thus, only the third query 185 is executed to substitute execution of both the first query 180 and the third query 185. If it is determined at 510 that the execution efficiency of the third query is lower than that of the first query, then the first query is used to replace the third query at 514.

Besides, if it is determined at 506 that the second query and the fourth query have different execution plans, then it is determined at 516 that the first query and the third query have different semantics, which indicates that the first query and the third query cannot be optimized therebetween. However, the first query or third query may be compared with other queries to determine whether to perform optimization.

Therefore, according to embodiments of the present disclosure, it is possible to identify queries with the same semantics in the functional graph traversal language by translating the functional graph traversal language so as to optimize queries in the functional graph traversal language. Moreover, after the queries with the same semantics in the functional graph traversal language are identified, it is possible to select a query with the highest execution efficiency for execution, thereby improving the execution efficiency.

It is to be understood that as Gremlin is a data-flow command language, basic statements therein may involve operation statement, cyclic statement, condition branch statement, and unconditional branch statement. These statements may involve flow control, iteration, temporary variable definition, advanced data structure (array, dictionary, tree structure), side effect and dependency between steps.

Taking dependency relation as an example, dependency relation determines that some steps must be completed before other steps so as to prevent "rearrangement" during query optimization. For example, optional() and coalesce() steps in Gremlin represent if-else logic, and all the steps in the if-else system can only be implemented after steps prior to optional() and coalesce() are completed. Moreover, side effect steps aggregate() and store() in Gremlin will also generate dependency relation. The two steps both transfer data in a temporary variable so as to be retrieved through other steps (such as cap()). To ensure data stored in the variable are correct, all the steps prior to the side effect step must be completed firstly, and all the steps after the side effect step must be performed later.

In the traditional standard SQL, it is generally impossible to express content involved in basic statements of the command language. To overcome this defect, embodiments of the present disclosure provide a self-defined table-value function (TVF) to preserve flow control, iteration, temporary variable definition, advanced data structure (array, dictionary, tree structure), side effect and dependency between steps in Gremlin accurately. TVF semantics in embodiments of the present disclosure is mostly unchanged and compatible with other SQL constructs.

TVF is a user-defined function that takes input as values from an incoming row and outputs zero or more rows each with a predefined number of columns. Taking a table as an input, the TVF is invoked repeatedly for each row of the input table and the results of all invocations are concatenated vertically. The concatenated rows form a new table which may be assigned a new alias and referenced in other parts of extended SQL, for example, a Boolean condition in the WHERE clause references a column of the table produced by the TVF, or some columns of this table are the input of another TVF.

In some embodiments, for steps in Gremlin, the corresponding TVF may be provided. TVF according to embodiments of the present disclosure can express complex Gremlin steps and has three important properties. First, TVF may change cardinality and may be downsized and upsized. This is an unavoidable requirement, given that many Gremlin steps can go either direction. By comparison, Boolean expressions only downsize the results, and scalar expressions do not change cardinality. Second, TVF is user-defined and what rows an invocation produces is completely defined by the user. As long as enough information is passed in as input parameters, the computation logic of the TVF can be made exactly the same as its Gremlin counterpart. By comparison, table joins and their variants (natural joins, outer joins) have very rigid semantics and it is generally impossible to twist them to fit Gremlin steps. Third, the input of a TVF may come from other vertices/edge variables and/or TVFs, thereby creating an implicit dependency graph such that a TVF can only be evaluated after the parent variables/TVFs have been executed. In this way, steps that cannot be rearranged or optimized can be identified in extended SQL and meanwhile, steps that can be rearranged or optimized are identified.

When the TVF corresponding to the Gremlin step is defined, it is semantically necessary to define the input of the function and the columns generated by TVF. For example, the function's input is a list of scalar values from prior table references that are necessary to specify the computation logic of the function. The output columns should contain all columns requested by the Gremlin steps following the TVF's corresponding steps. The columns are either fixed or dynamic. The dynamic set of columns is specified by the TVF's parameters too, either explicitly through a list of column names or implicitly through scalar sub-queries. Therefore, different from the conventional standard SQL, for the extended SQL according to embodiments of the present disclosure, a TVF's output columns are always fixed and predefined when the function is declared and registered in the database

That is, during the process of translating Gremlin query to extended SQL query, it is possible to identify the dependency between a plurality of steps included in Gremlin query and retain the dependency in the extended SQL query using a table-valued function. Optionally, the side effect step in Gremlin query may also be retained in extended SQL query, although the output of the executed Gremlin query itself is generally not influenced by whether the side effect step is executed.

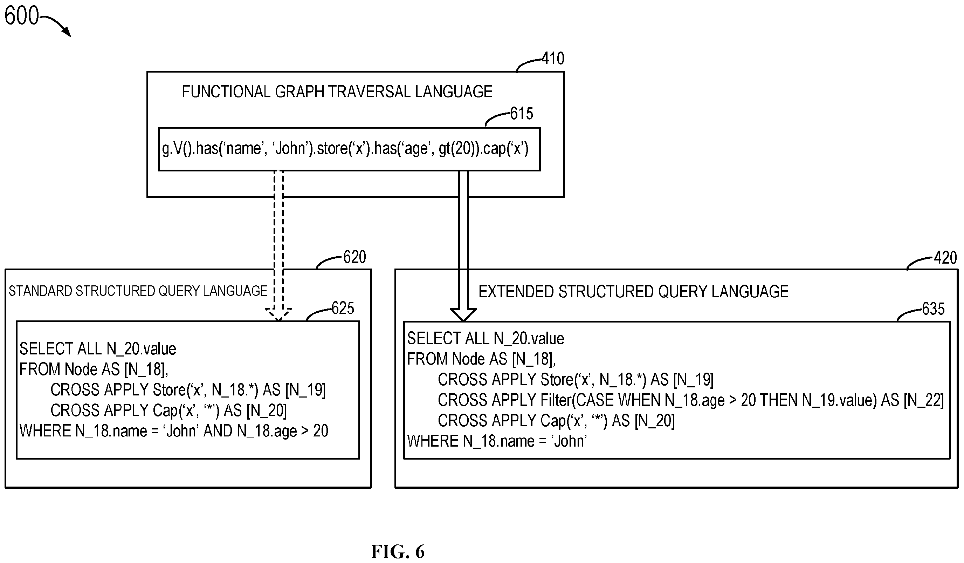

Moreover, filter steps in Gremlin are not always mapped to Boolean predicates in the WHERE clause. In some cases, they should be mapped to Boolean predicates to execute TVF of filter logic. A Boolean predicate in WHERE clause would lose dependency to other table reference. When one filter step follows a Gremlin side effect step, it is necessary to perform further processing according to embodiments of the present disclosure. Fig. 6 shows a schematic diagram 600 for translating dependency in the functional graph traversal language according to embodiments of the present disclosure.

As shown in Fig. 6, query 615 in functional graph traversal language 410 (such as Gremlin) includes a side effect step Store() which stores a vertex with the name of "John" into a temporary variable, which is then retrieved with a Cap() step. As Gremlin query 615 includes a side effect step Store(), the following steps can be executed only after the Store() step is executed, and the steps after step Store() have dependency on step Store().

If the dependency of the side effect step Store() is neglected when Gremlin query 615 is translated to standard SQL, then as shown in Fig. 6, in the query 625 in the generated standard SQL 420, two filter steps are both in WHERE clause. In the standard SQL query 625, although the dependencies of Store() and Cap() are reserved, Store() can only be evaluated after N_18 and Cap() must be evaluated after Store(), because the input of Store() depends on N_18 and Cap() can only find variable 'x' after Store(). However, this plan would result in vertices satisfying both predicates stored in the temporary variable, which violates the original query's intent: only vertex whose name is John is stored.

Continuing to refer to Fig. 6, in embodiments of the present disclosure, Gremlin query 615 is translated to query 635 in the extended SQL 420, and "Filter(CASE WHEN N_18.age > 20 THEN N_19.value) AS [N_22]" is added in FROM clause. By moving the second predicate as a filter TVF into FROM clause, the predicate's relative position with respect to other tables and TVFs is preserved in the FROM clause and thus, embodiments of the present disclosure can represent the semantics of the original Gremlin query faithfully without omitting the dependency between steps.

In some embodiments, based on whether Gremlin query has sub-traversals, TVFs may be divided into two types: Gremlin queries having no sub-traversal and Gremlin queries having sub-traversals. For Gremlin steps having no sub-traversals, a TVF in this category takes input as a scalar value list, and the output is either a fixed number of columns (without any specification at all), or a dynamic set of columns whose names are provided in the scalar value list. In other words, the input value list consists of two parts, the first of which defines the computation logic and the second defines a list of column names to output.

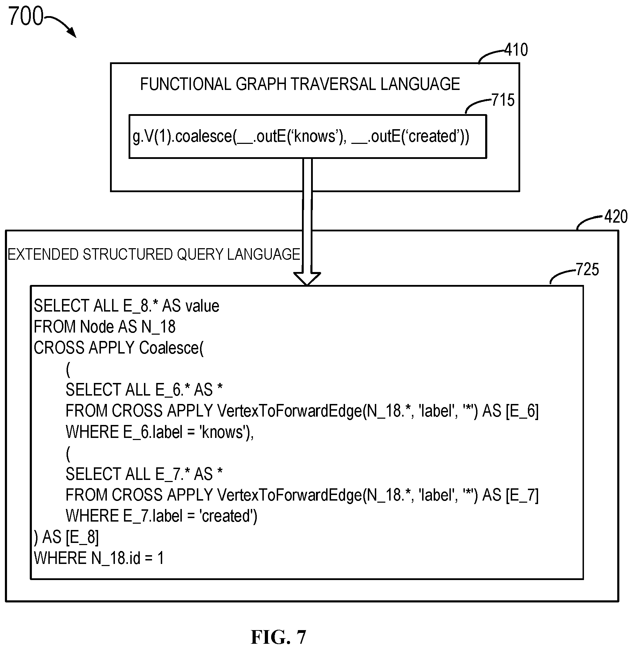

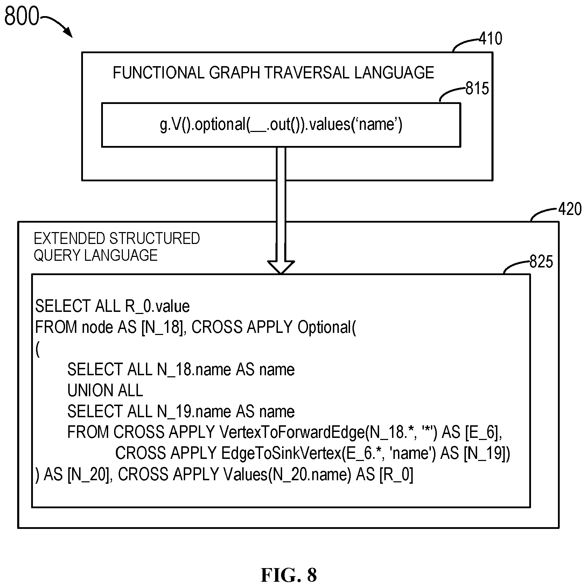

For a Gremlin query with one or more sub-traversals, a TVF in this category takes input as one or more SELECT sub-queries, which reference vertex/edge variables and TVFs in its parent context, when the sub-traversal references data from prior Gremlin steps. The TVF's output columns are specified by the projected columns in the SELECT clause of the sub-queries. When there are a plurality of sub-traversals, the SELECT elements in all SELECT sub-queries must be aligned, that is, the number of columns output by a plurality of sub-queries respectively is the same, so that the output table presents a unified view of all output records, which may be produced by any sub-traversals. Figs. 7 and 8 below depict an example for translating Gremlin query with one or more sub-traversals.

Fig. 7 shows a schematic diagram for translating a coalesce() step in functional graph traversal language according to embodiments of the present disclosure. Referring to Fig. 7, for a query 715 in the functional graph traversal language 410 (such as Gremlin), the coalesce() step contained therein means for each incoming object, the step evaluates all sub-traversals in order and outputs the results of the first non-empty traversal. In other words, the coalesce() step firstly executes a first sub-traversal therein, returns the result if any, and stops execution of the following sub-traversals; or else, it executes a second sub-traversal.

In accordance with embodiments of the present disclosure, Gremlin query 715 may be translated into query 725 in the extended SQL 420. In the translated SQL query 725, each sub-traversal of coalesce() is translated to a SELECT sub-query. The two sub-queries are two input parameters of the TVF Coalesce(). The computation logic of this TVF is that each record from N_18 is evaluated against the two SELECT sub-queries and the result returned by the first sub-query is taken as the result of the step. For each invocation, the input record from N_18 is digested through VertexToForwardEdge() (which is another TVF in the SELECT sub-query). This TVF takes input as a vertex in the JSON format, that is, N_18. *, and outputs a two-field record, one for the edge label and the other for the JSON representation of the edge. Both fields are populated because they are needed: the "label" field is referenced in the WHERE clause for an equality check; the "*" field is projected in the SELECT clause, given that both sub-traversals return edges. The two SELECT clauses of the two sub-queries also define that the TVF Coalesce() produces a one-column table in this query and the column name is "*". As coalesce() in the original Gremlin query is the last step, this column is eventually projected in the top-level SELECT clause, and it outputs edges.

Fig. 8 shows a schematic diagram 800 for translating an optional() step in functional graph traversal language according to embodiments of the present disclosure. Referring to Fig. 8, for a query 815 in the functional graph traversal language 410 (such as Gremlin), the optional() step contained therein means performing a second sub-traversal therein, a result is returned (if any), and executing the following sub-traversals is stopped; and the first sub-traversal is executed otherwise.

In accordance with embodiments of the present disclosure, Gremlin 815 may be translated into a query 825 in extended SQL 420. Though the optional() step has only one sub-traversal, its TVF's input contains an additional SELECT sub-query, which has only the SELECT clause. The selected element (namely, N_18.name) comes from the table reference of the prior Gremlin step. Therefore, it only projects values of input records. For each input record, the TVF's results come from the second sub-query, if its result is non-empty, or the result is the projection of the input record. No matter what branch an input record goes through, the sub-queries project the same set of columns, so the TVF presents a unified view: values(). The projected column ("name") is what the following step asks for.

Besides, count(), sum() and sample() steps in Gremlin queries always output a fixed number of columns, where count() and sum() output a numeric column, whereas sample() outputs no columns. The numeric column's name is predefined, because it is fixed for any query. In general, most TVFs have a default projection column, and a column is returned when no additional column is requested by the following steps. The default column's name is "*" (star) when the TVF returns to vertex/edge objects or predefined otherwise. Data modification steps in Gremlin query (such as addV() and addE()) are example steps outputting a dynamic set of columns, which are vertex/edge properties needed by the following Gremlin steps. This is because by Gremlin semantics, data modification steps return target objects (vertices/edges/properties) in addition to persisting changes and pass them to the following steps.

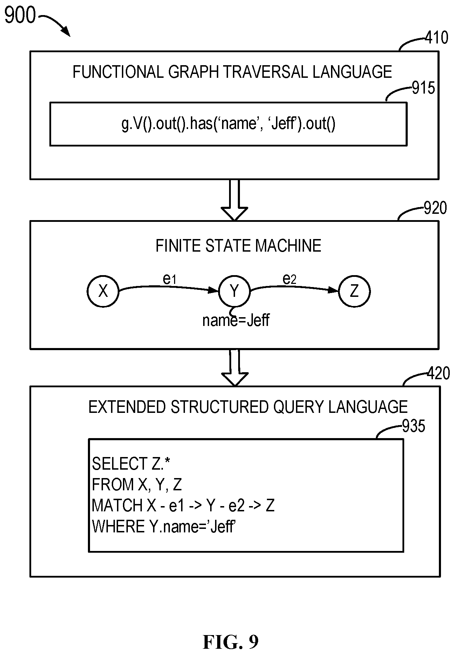

Fig. 9 shows a schematic diagram 900 for translating the functional graph traversal language to the extended Structured Query Language using a finite-state machine (FSM) according to embodiments of the present disclosure. The translation algorithm used by the translating module 125 executes a finite-state machine (FSM) which consists of states that Gremlin steps produce in a traversal. Each time a Gremlin step is appended to the end of the traversal, the FSM moves to a new state by applying the transition function which is defined by this Gremlin step's semantics. The translation algorithm executes transiting functions one after another by the order of Gremlin steps in the original query and maps each transition and its output state to a corresponding SQL construct, for example, a TVF in the FROM clause or a Boolean predicate in the WHERE clause. When the FSM terminates, the algorithm assembles all SQL constructs to an extended SQL query, which provides a full-fidelity representation of the Gremlin query.

As shown in Fig. 9, a query 915 in the functional graph traversal language (such as Gremlin) 410 is firstly translated into the state in FSM 920. For example, FSM 920 involves three vertices X, Y and Z and the property of the vertex Y "name=Jeff." According to the state in FSM 920, the query is then translated to query 935 in the extended SQL 420. The extended SQL 935 includes a MATCH clause describing directed edges between vertices.

In accordance with embodiments of the present disclosure, some transition functions have strict requirements on the input state, while others are applicable to any states. Applying a function to an unacceptable state will yield an exception, which means that the Gremlin query is invalid. All vertex steps, including out(), in(), both(), outE(), inE(), bothE, outV(), inV(), bothV() and otherV(), belong to the former category. For example, the out() step moves from a vertex to its outgoing neighbors by Gremlin semantics. Hence, it is invalid when the prior step leads to a non-vertex state. From the compiler perspective, checking the input state requirements is similar to static type checking, which is done at compilation time or translation time.

It is to be understood that each transition function will lead to an output state. Some transition functions do not yield a new state and always stay in its input state. These functions mostly correspond to Gremlin steps that filter/re-arrange input in a certain way but do not produce any new data, such as and(), or(), has(), where(), range(), order(). Other functions always move to a new state. Some functions' outputs are deterministic. For example, transition functions of vertex steps and data modification steps (such as addV() and addE()) lead to either a vertex or an edge state. Value aggregation steps (such as sum() and count()) always lead to a numeric-value state. Fold() and Project() are a special type of aggregation steps that generates an array and a map respectively. But not all functions' output can be determined at translation time. These functions correspond to branch steps (such as optional(), union() and coalesce()) that execute if-else logic, where the "if' branch and the "else" branch may produce different states and steps that extract data from a prior step whose state is itself obscure (such as select() and unfold()). For these cases, instead of maintaining all possible output states in the FSM, which may eventually lead to a combinatorial explosion, a "composite" state is created for each such function, in which the following transition function is applied. A direct consequence of this design is that those transition functions that restrict the input to a certain type must be extended to support these composite states. The validity of query in return can only be checked at runtime.

For example, consider the following Gremlin query:

g.ᵥ(1).coalesce(_.outE(), __.in()).out()

Where the expected input of the last out() step is vertex, and the query will only be valid if the coalesce() step outputs results from the second sub-traversal. Since which sub-traversal to execute is unknown at translation time, the translation algorithm assumes either sub-traversal of coalesce() is possible and adds a composite state to the FSM on which the out() step will create a new state.

As the FSM moves from one state to another, the translation algorithm builds extended SQL queries through transition. In general, vertex steps' output states are mapped to node table references in the FROM clause or edge names in the MATCH clause. Filter steps are mapped to Boolean predicates in the WHERE clause. Other steps are mapped to their corresponding TVFs in the FROM clause.

However, exceptions may exist in the translation process. For example, when the translation state following the vertex step is composite Gremlin step, there is an additional Boolean predicate to connect the TVF of the former Gremlin step to the node table reference of the latter vertex step. For example, for the example coalesce().out(), in additional to a node table reference of out() and a TVF of coalesce(), there will be an equality-comparison predicate, binding the vertex ID column of the node table to one of the TVF's columns. Such a connection is conventionally expressed as an edge names in the MATCH clause, which is a free variable that is bound to all edges. But since in this case edges are implicitly derived from the composite state, they cannot be defined in the MATCH clause. Besides using a Boolean predicate, an alternative approach for this case is to map out() to a TVF too, whose computation logic is to load a set of vertices which are bound by the output of the prior TVF.

Moreover, the key of translating Gremlin query to extended SQL query is to obtain columns projected by each TVF. In SQL, the table (including the dynamic table generated by TVF) generally has a fixed number of columns. SQL is considered valid and thus can be compiled only if all scalar expressions reference available columns. So a basic requirement of the translated expanded SQL query is that every TVF outputs all columns needed/referenced by other SQL constructs. Gremlin, however, adopts the object-oriented model when defining semantics: an object contains the full state of the current traversal and fields/properties are pulled from the object upon requests of Gremlin steps. Missing fields/properties will only be detected at runtime.

Populate() is a safeguard mechanism in translation that populates output columns for each table reference and TVF and ensures that the output columns contain all referenced by SQL counterparts of later Gremlin steps. It is implemented as a virtual function of every FSM state. The function follows a contract that each time Populate(string colName) is invoked, the state's corresponding TVF must output a column "colName". This includes the situation when the state itself cannot produce "colName" but still needs to populate the column in the output table, whose values are therefore all null. This also includes the situation when producing such a column needs to further invoke Populate() of other FSM states, creating a cascade effect.

Populate() is a virtual function and its implementation varies by semantics of different FSM states (and their corresponding Gremlin steps). For example, in the following example:

g.V().has('name, 'John')

Where has() step adds a WHERE-clause predicate to the FSM. But before that it needs to make sure the column "name" is available in the target table. The has() step points to a vertex variable and its state's Populate() is invoked. Since the vertex variable is mapped to a Node table and we assume a Node table contains all properties due to flexible schemas, a vertex variable's Populate() is a void function.

Besides, the following provides another Gremlin query example that triggers cascade effects: g.V(1).coalesce(_.in('x'), _.in('y')).optional(_.out()).has('name', 'John'), where the last step has() will add a Boolean predicate and need to invoke Populate() to make sure the predicate's target table has the column. In this case, it is TVF of optional(). Since the output of optional() may come from its sub-traversal or its input, the implementation of optional()'s Populate() must make sure both the sub-traversal and its input have the "name" column, thereby invoking Populate() for the sub-traversal (_.out()) and the input coalesce state respectively.

Many Gremlin steps involve nested sub-traversals, for instance, coalesce(), optional(), flatMap(). At the high level, a sub-traversal is a new query and is translated separately by executing a new FSM and translating it to an extended SQL query. The only difference is that the sub-traversal is linked to the outer traversal through "_" (double underscore), which passes the states of the outer traversal to the inner sub-traversal as its input. Hence, the Gremlin steps in the sub-traversal can see and reference data from the outer traversal. In return, the translated SQL of the sub-traversal is a sub-query and may reference a table and its columns in the parent query.

It is to be understood that the double underscore "_" is mapped to a surrogate state in the FSM that points to the sub-traversal's input state in the parent traversal. This state is not mapped to any SQL construct when building the SQL IL, but does implement Populate() such that any outside data referenced by the inner Gremlin steps are populated appropriately in the input state. As such, the translated SQL sub-query is sound in that all the column references of the parent query are valid.

In addition, the scheme of translating Gremlin to extended SQL query in accordance with embodiments of the present disclosure can translate query processing to record-oriented. In a standard implementation of Gremlin, Gremlin query is comprised by Gremlin steps which are directly mapped to a pipe of objects, and the computation logic of Gremlin steps is implemented as the object's virtual functions. While the object-oriented semantics is convenient for an object-oriented runtime, the object-oriented model mixes data and computation and is difficult to support many runtime features, such as concurrency control, batch processing and query pagination.

According to embodiments of the present disclosure, a record-oriented model is used to decouple data and computation: execution runtime consists of one or more execution operators chained together, each injects and projects a stream of records with a fixed set of columns/fields. This requirement is well aligned with SQL, because SQL tables have a fixed number of columns and several of them are concatenated. To enable record-oriented execution, the translation component is responsible for reasoning the input and output objects of each Gremlin step and converting them into collections of multi-field records, which are naturally represented as tables in the extended SQL. Therefore, embodiments of the present disclosure achieve decoupling of data and operation and can reduce invoking and realize batch processing, thereby improving query efficiency.

The functionally described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of this disclosure, a machine readable medium may be any tangible medium that may contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular implementations.

Although the present disclosure has been described with languages specific to structural characteristics and/or method logic actions, it should be appreciated that the subject matter defined by the attached claims is not limited to the above described particular characteristics and actions. Conversely, the above described particular characteristics and actions are only example forms for realizing the claims.

**Claims**

1.　A computer-implemented method (200; 500) of identifying queries with the same semantics in a functional graph traversal language (410), the method comprising:

obtaining (202) a first query (180) in the functional graph traversal language (410), the first query (180) involving a directed edge (311, 312, 313, 321, 331) describing a neighboring relation between vertices (310, 320, 330, 340) in a graph (300);
translating (204) the first query (180) to a second query (190) in an extended Structured Query Language (SQL) (420), the second query (190) including a clause describing the directed edge (311, 312, 313, 321, 331);
obtaining (502) a third query (185) in the functional graph traversal language (410);
translating (504) the third query (185) to a fourth query in the extended SQL (420);
determining (506) whether the second query (190) and the fourth query have the same execution plan; and
in response to determining (506) that the second query (190) and the fourth query have a same execution plan, determining (508) that the first query (180) and the third query (185) have same semantics.

2.　The method according to claim 1, further comprising optimizing queries in the functional graph traversal language by:

comparing (510) execution efficiency of the third query (185) with execution efficiency of the first query (180); and
in response to determining that the execution efficiency of the third query (185) is higher than the execution efficiency of the first query (180), replacing (512) the first query (180) with the third query (185); or
in response to determining that the execution efficiency of the of the third query (185) is lower than the execution efficiency of the first query (180), using (514) the first query (180) to replace the third query (185).

3. The method (200; 500) according to claim 1, wherein translating the first query (180) to the second query (190) comprises:

identifying a basic statement in a command language included in the first query (180); and
retaining content of the basic statement in the second query (190) using a table-valued function, the table-valued function being a user-defined function that is able to define an input and the number of output columns.

4. The method (200; 500) according to claim 3, wherein:

the identifying a basic statement in the command language comprises: identifying a side effect step included in the first query (180), wherein it does not influence an output of the first query (180) whether the side effect step is executed, and
the retaining content of the basic statement comprises: retaining the side effect step in the second query (190).

5. The method (200; 500) according to claim 1, wherein the translating the first query (180) to the second query (190) comprises:

determining whether the first query (180) involves a plurality of sub-traversals; and
in response to determining that the first query (180) involves the plurality of sub-traversals, translating the plurality of sub-traversals in the first query (180) to a plurality of sub-queries in the second query (190), the plurality of sub-queries each outputting the same number of columns.

6. The method (200; 500) according to claim 1, wherein the translating (204) the first query (180) to the second query (190) comprises:
determining the number of columns output by the second query (190) based on a SELECT statement in the second query (190).

7. The method (200; 500) according to claim 1, wherein the translating (204) the first query (180) to the second query (190) comprises:

generating a state in a finite state machine (FSM) based on a step in the first query (180); and
generating the second query (190) based on the state in the FSM.

8. The method (200;500) according to claim 1, wherein the functional graph traversal language (410) is a Gremlin language, and wherein the extended SQL (420) is an extended version of a standard SQL.

9. An electronic device (100) for identifying queries with the same semantics in a functional graph traversal language (410), the electronic device (100) comprising:

a processing unit (110);
a memory (120) coupled to the processing unit (110) and storing instructions, the instructions, when executed by the processing unit (110), executing the following acts:

obtaining (202) a first query (180) in the functional graph traversal language (410), the first query (180) involving a directed edge (311, 312, 313, 321, 331) describing a neighboring relation between vertices (310, 320, 330, 340) in a graph (300); and
translating (204) the first query (180) to a second query (190) in an extended Structured Query Language (SQL) (420), the second query (190) including a clause describing the directed edge (311, 312, 313, 321, 331);
obtaining (502) a third query (185) in the functional graph traversal language;
translating (504) the third query (185) to a fourth query in the extended SQL (420);
determining (506) whether the second query (190) and the fourth query have the same execution plan; and
in response to determining (506) that the second query (190) and the fourth query have a same execution plan, determining (508) that the first query (180) and the third query (185) have same semantics.

10. The electronic device according to claim 9, the acts further comprising optimizing queries in the functional graph traversal language by:

comparing (510) execution efficiency of the third query (185) with execution efficiency of the first query (180); and in response to determining that the execution efficiency of the third query (185) is higher than the execution efficiency of the first query (180), replacing (512) the first query (180) with the third query (185); or in response to determining that the execution efficiency of the of the third query (185) is lower than the execution efficiency of the first query (180), using (514) the first query (180) to replace the third query (185).

11. The electronic device (100) according to claim 9, wherein the translating the first query (180) to the second query (190) comprises:

identifying a basic statement in a command language included in the first query (180); and retaining content of the basic statement in the second query (190) using a table-valued function, the table-valued function being a user-defined function that is able to define an input and the number of output columns.

12. The electronic device (100) according to claim 11, wherein:

the identifying a basic statement in the command language comprises: identifying a side effect step included in the first query (180), wherein it does not influence an output of the first query (180) whether the side effect step is executed, and the retaining content of the basic statement comprises: retaining the side effect step in the second query (190).

13. The electronic device (100) according to claim 9 wherein the translating the first query (180) to the second query (190) comprises:

determining whether the first query (180) involves a plurality of sub-traversals; and in response to determining that the first query (180) involves the plurality of sub-traversals, translating the plurality of sub-traversals in the first query (180) to a plurality of sub-queries in the second query (190), the plurality of sub-queries each outputting the same number of columns.

14. A computer program product being stored on a computer readable medium and including computer executable instructions, the computer executable instructions, when executed, causing the computer to identify queries with the same semantics in a functional graph traversal language (410) by:

obtaining (202) a first query (180) in the functional graph traversal language (410), the first query (180) involving a directed edge (311, 312, 313, 321, 331) describing a neighboring relation between vertices (310, 320, 330, 340) in a graph (300); and translating (204) the first query (180) to a second query (190) in an extended Structured Query Language (SQL) (420), the second query (190) including a clause describing the directed edge (311, 312, 313, 321, 331); obtaining (502) a third query (185) in the functional graph traversal language (410); translating (504) the third query (185) to a fourth query in the extended SQL (420); determining (506) whether the second query (190) and the fourth query have the same execution plan; and in response to determining (506) that the second query (190) and the fourth query have a same execution plan, determining (508) that the first query (180) and the third query (185) have same semantics.

15. The computer program product of claim 14 wherein the computer executable instructions, when executed, further cause the computer to optimize queries in the functional graph traversal language by:

comparing (510) execution efficiency of the third query (185) with execution efficiency of the first query (180); and in response to determining that the execution efficiency of the third query (185) is higher than the execution efficiency of the first query (180), replacing (512) the first query (180) with the third query (185); or in response to determining that the execution efficiency of the of the third query (185) is lower than the execution efficiency of the first query (180), using (514) the first query (180) to replace the third query (185).

**Patentansprüche**

1. Computerimplementiertes Verfahren (200; 500) zum Identifizieren von Abfragen mit derselben Semantik in einer Functional-Graph-Traversal-Sprache (410), wobei das Verfahren Folgendes umfasst:

   Erhalten (202) einer ersten Abfrage (180) in der Functional-Graph-Traversal-Sprache (410), wobei die erste Abfrage (180) eine gerichtete Kante (311, 312, 313, 321, 331) involviert, die eine benachbarte Beziehung zwischen Scheitelpunkten (310, 320, 330, 340) in einem Diagramm (300) beschreibt;
   Übersetzen (204) der ersten Abfrage (180) in eine zweite Abfrage (190) in einer erweiterten Structured-Query-Sprache (SQL) (420), wobei die zweite Abfrage (190) eine Klausel beinhaltet, die die gerichtete Kante (311, 312, 313, 321, 331) beschreibt;
   Erhalten (502) einer dritten Abfrage (185) in der Functional-Graph-Traversal-Sprache (410);
   Übersetzen (504) der dritten Abfrage (185) in eine vierte Abfrage in der erweiterten SQL (420);
   Bestimmen (506), ob die zweite Abfrage (190) und die vierte Abfrage denselben Ausführungsplan aufweisen; und
   als Reaktion auf Bestimmen (506), dass die zweite Abfrage (190) und die vierte Abfrage denselben Ausführungsplan aufweisen, Bestimmen (508), dass die erste Abfrage (180) und die dritte Abfrage (185) dieselbe Semantik aufweisen.

2. Verfahren nach Anspruch 1, das weiter das Optimieren von Abfragen in der Functional-Graph-Traversal-Sprache umfasst durch:

   Vergleichen (510) von Ausführungseffizienz der dritten Abfrage (185) mit Ausführungseffizienz der ersten Abfrage (180); und
   als Reaktion auf Bestimmen, dass die Ausführungseffizienz der dritten Abfrage (185) höher ist als die Ausführungseffizienz der ersten Abfrage (180), Ersetzen (512) der ersten Abfrage (180) durch die dritte Abfrage (185); oder
   als Reaktion auf Bestimmen, dass die Ausführungseffizienz der dritten Abfrage (185) geringer ist als die Ausführungseffizienz der ersten Abfrage (180), Verwenden (514) der ersten Abfrage (180), um die dritte Abfrage (185) zu ersetzen.

3. Verfahren (200; 500) nach Anspruch 1, wobei Übersetzen der ersten Abfrage (180) in die zweite Abfrage (190) Folgendes umfasst:

   Identifizieren einer Grundaussage in einer Befehlssprache, die in der ersten Abfrage (180) beinhaltet ist; und
   Beibehalten des Inhalts der Grundaussage in der zweiten Abfrage (190) unter Verwendung einer Tabellenwertfunktion, wobei die Tabellenwertfunktion eine benutzerdefinierte Funktion ist, die in der Lage ist, eine Eingabe und die Anzahl der Ausgabespalten zu definieren.

4. Verfahren (200; 500) nach Anspruch 3, wobei:

   das Identifizieren einer Grundaussage in der Befehlssprache umfasst: Identifizieren eines Nebeneffektschritts, der in der ersten Abfrage (180) beinhaltet ist, wobei es keinen Einfluss auf eine Ausgabe der ersten Abfrage (180) hat, ob der Nebeneffektschritt ausgeführt wird, und
   der Beibehaltungsinhalt der Grundaussage umfasst: Beibehalten des Nebeneffektschritts in der zweiten Abfrage (190).

5. Verfahren (200; 500) nach Anspruch 1, wobei das Übersetzen der ersten Abfrage (180) in die zweite Abfrage (190) Folgendes umfasst:

   Bestimmen, ob die erste Abfrage (180) eine Vielzahl von Subtraversals involviert; und
   als Reaktion auf Bestimmen, dass die erste Abfrage (180) die Vielzahl von Subtraversals involviert, Übersetzen der Vielzahl von Subtraversals in der ersten Abfrage (180) in eine Vielzahl von Subtraversals in der zweiten Abfrage (190), wobei die Vielzahl von Subtraversals jeweils die gleiche Anzahl von Spalten ausgeben.

6. Verfahren (200; 500) nach Anspruch 1, wobei das Übersetzen (204) der ersten Abfrage (180) in die zweite Abfrage (190) Folgendes umfasst:
   Bestimmen der Anzahl der von der zweiten Abfrage (190) ausgegebenen Spalten basierend auf einer SELECT-Aussage in der zweiten Abfrage (190).

**7.** Verfahren (200; 500) nach Anspruch 1, wobei das Übersetzen (204) der ersten Abfrage (180) in die zweite Abfrage (190) Folgendes umfasst:

Erzeugen eines Zustands in einer endlichen Zustandsmaschine (FSM) basierend auf einem Schritt in der ersten Abfrage (180); und
Erzeugen der zweiten Abfrage (190) basierend auf dem Zustand in der FSM.

**8.** Verfahren (200; 500) nach Anspruch 1, wobei die Functional-Graph-Traversal-Sprache (410) eine Gremlin-Sprache ist, und wobei die erweiterte SQL (420) eine erweiterte Version einer Standard-SQL ist.

**9.** Elektronische Vorrichtung (100) zum Identifizieren von Abfragen mit derselben Semantik in einer Functional-Graph-Traversal-Sprache (410), wobei die elektronische Vorrichtung (100) Folgendes umfasst:

eine Verarbeitungseinheit (110);
einen Speicher (120), der an die Verarbeitungseinheit (110) gekoppelt ist und Anweisungen speichert, wobei die Anweisungen, wenn sie von der Verarbeitungseinheit (110) ausgeführt werden, die folgenden Aktionen ausführen:

Erhalten (202) einer ersten Abfrage (180) in der Functional-Graph-Traversal-Sprache (410), wobei die erste Abfrage (180) eine gerichtete Kante (311, 312, 313, 321, 331) involviert, die eine benachbarte Beziehung zwischen Scheitelpunkten (310, 320, 330, 340) in einem Diagramm (300) beschreibt; und
Übersetzen (204) der ersten Abfrage (180) in eine zweite Abfrage (190) in einer erweiterten Structured-Query-Sprache (SQL) (420), wobei die zweite Abfrage (190) eine Klausel beinhaltet, die die gerichtete Kante (311, 312, 313, 321, 331) beschreibt;
Erhalten (502) einer dritten Abfrage (185) in der Functional-Graph-Traversal-Sprache;
Übersetzen (504) der dritten Abfrage (185) in eine vierte Abfrage in der erweiterten SQL (420);
Bestimmen (506), ob die zweite Abfrage (190) und die vierte Abfrage denselben Ausführungsplan aufweisen; und
als Reaktion auf Bestimmen (506), dass die zweite Abfrage (190) und die vierte Abfrage denselben Ausführungsplan aufweisen, Bestimmen (508), dass die erste Abfrage (180) und die dritte Abfrage (185) dieselbe Semantik aufweisen.

**10.** Elektronische Vorrichtung nach Anspruch 9, wobei die Schritte weiter das Optimieren von Abfragen in der Functional-Graph-Traversal-Sprache umfassen durch:

Vergleichen (510) von Ausführungseffizienz der dritten Abfrage (185) mit Ausführungseffizienz der ersten Abfrage (180); und
als Reaktion auf Bestimmen, dass die Ausführungseffizienz der dritten Abfrage (185) höher ist als die Ausführungseffizienz der ersten Abfrage (180), Ersetzen (512) der ersten Abfrage (180) durch die dritte Abfrage (185); oder
als Reaktion auf Bestimmen, dass die Ausführungseffizienz der dritten Abfrage (185) geringer ist als die Ausführungseffizienz der ersten Abfrage (180), Verwenden (514) der ersten Abfrage (180), um die dritte Abfrage (185) zu ersetzen.

**11.** Elektronische Vorrichtung (100) nach Anspruch 9, wobei das Übersetzen der ersten Abfrage (180) in die zweite Abfrage (190) Folgendes umfasst:

Identifizieren einer Grundaussage in einer Befehlssprache, die in der ersten Abfrage (180) beinhaltet ist; und
Beibehalten des Inhalts der Grundaussage in der zweiten Abfrage (190) unter Verwendung einer Tabellenwertfunktion, wobei die Tabellenwertfunktion eine benutzerdefinierte Funktion ist, die in der Lage ist, eine Eingabe und die Anzahl der Ausgabespalten zu definieren.

**12.** Elektronische Vorrichtung (100) nach Anspruch 11, wobei:

das Identifizieren einer Grundaussage in der Befehlssprache umfasst: Identifizieren eines Nebeneffektschritts, der in der ersten Abfrage (180) beinhaltet ist, wobei es keinen Einfluss auf eine Ausgabe der ersten Abfrage (180) hat, ob der Nebeneffektschritt ausgeführt wird, und
der Beibehaltungsinhalt der Grundaussage umfasst: Beibehalten des Nebeneffektschritts in der zweiten Abfrage (190).

13. Elektronische Vorrichtung (100) nach Anspruch 9, wobei das Übersetzen der ersten Abfrage (180) in die zweite Abfrage (190) Folgendes umfasst:

Bestimmen, ob die erste Abfrage (180) eine Vielzahl von Subtraversals involviert; und
als Reaktion auf Bestimmen, dass die erste Abfrage (180) die Vielzahl von Subtraversals involviert, Übersetzen der Vielzahl von Subtraversals in der ersten Abfrage (180) in eine Vielzahl von Subtraversals in der zweiten Abfrage (190), wobei die Vielzahl von Subtraversals jeweils die gleiche Anzahl von Spalten ausgeben.

14. Computerprogrammprodukt, das auf einem computerlesbaren Medium gespeichert ist und computerausführbare Anweisungen beinhaltet, wobei die computerausführbaren Anweisungen bei ihrer Ausführung den Computer dazu veranlassen, Abfragen mit derselben Semantik in einer Functional-Graph-Traversal-Sprache (410) zu identifizieren durch:

Erhalten (202) einer ersten Abfrage (180) in der Functional-Graph-Traversal-Sprache (410), wobei die erste Abfrage (180) eine gerichtete Kante (311, 312, 313, 321, 331) involviert, die eine benachbarte Beziehung zwischen Scheitelpunkten (310, 320, 330, 340) in einem Diagramm (300) beschreibt; und
Übersetzen (204) der ersten Abfrage (180) in eine zweite Abfrage (190) in einer erweiterten Structured-Query-Sprache (SQL) (420), wobei die zweite Abfrage (190) eine Klausel beinhaltet, die die gerichtete Kante (311, 312, 313, 321, 331) beschreibt;
Erhalten (502) einer dritten Abfrage (185) in der Functional-Graph-Traversal-Sprache (410);
Übersetzen (504) der dritten Abfrage (185) in eine vierte Abfrage in der erweiterten SQL (420);
Bestimmen (506), ob die zweite Abfrage (190) und die vierte Abfrage denselben Ausführungsplan aufweisen; und
als Reaktion auf Bestimmen (506), dass die zweite Abfrage (190) und die vierte Abfrage denselben Ausführungsplan aufweisen, Bestimmen (508), dass die erste Abfrage (180) und die dritte Abfrage (185) dieselbe Semantik aufweisen.

15. Computerprogrammprodukt nach Anspruch 14, wobei die von dem Computer ausführbaren Anweisungen, wenn sie ausgeführt werden, den Computer weiter dazu veranlassen, Abfragen in der Functional-Graph-Traversal-Sprache zu optimieren durch:

Vergleichen (510) von Ausführungseffizienz der dritten Abfrage (185) mit Ausführungseffizienz der ersten Abfrage (180); und
als Reaktion auf Bestimmen, dass die Ausführungseffizienz der dritten Abfrage (185) höher ist als die Ausführungseffizienz der ersten Abfrage (180), Ersetzen (512) der ersten Abfrage (180) durch die dritte Abfrage (185); oder

als Reaktion auf Bestimmen, dass die Ausführungseffizienz der dritten Abfrage (185) geringer ist als die Ausführungseffizienz der ersten Abfrage (180), Verwenden (514) der ersten Abfrage (180), um die dritte Abfrage (185) zu ersetzen.

**Revendications**

1. Procédé mis en oeuvre par ordinateur (200 ; 500) consistant à identifier des requêtes avec la même sémantique dans un langage de parcours de graphe fonctionnel (410), le procédé comprenant :

l'obtention (202) d'une première requête (180) dans le langage de parcours de graphe fonctionnel (410), la première requête (180) impliquant une arête dirigée (311, 312, 313, 321, 331) décrivant une relation de voisinage entre des sommets (310, 320, 330, 340) dans un graphe (300) ;
la traduction (204) de la première requête (180) en une deuxième requête (190) dans un langage de requête structuré (SQL) étendu (420), la deuxième requête (190) incluant une clause décrivant l'arête dirigée (311, 312, 313, 321, 331) ;
l'obtention (502) d'une troisième requête (185) dans le langage de parcours de graphe fonctionnel (410) ;
la traduction (504) de la troisième requête (185) en une quatrième requête dans le SQL étendu (420) ;
la détermination (506) du fait que la deuxième requête (190) et la quatrième requête présentent ou non le même plan d'exécution ; et

en réponse à la détermination (506) que la deuxième requête (190) et la quatrième requête présentent un même plan d'exécution, la détermination (508) que la première requête (180) et la troisième requête (185) présentent une même sémantique.

2. Procédé selon la revendication 1, comprenant en outre l'optimisation de requêtes dans le langage de parcours de graphe fonctionnel par :

la comparaison (510) d'une efficacité d'exécution de la troisième requête (185) à une efficacité d'exécution de la première requête (180) ; et
en réponse à la détermination que l'efficacité d'exécution de la troisième requête (185) est supérieure à l'efficacité d'exécution de la première requête (180), le remplacement (512) de la première requête (180) par la troisième requête (185) ; ou
en réponse à la détermination que l'efficacité d'exécution de la troisième requête (185) est inférieure à l'efficacité d'exécution de la première requête (180), l'utilisation (514) de la première requête (180) pour remplacer la troisième requête (185).

3. Procédé (200 ; 500) selon la revendication 1, dans lequel la traduction de la première requête (180) en la deuxième requête (190) comprend :

l'identification d'une instruction de base dans un langage de commande inclus dans la première requête (180) ; et
la conservation du contenu de l'instruction de base dans la deuxième requête (190) à l'aide d'une fonction table, la fonction table étant une fonction définie par l'utilisateur qui est capable de définir une entrée et le nombre de colonnes de sortie.

4. Procédé (200, 500) selon la revendication 3, dans lequel :

l'identification d'une instruction de base dans le langage de commande comprend : l'identification d'une étape d'effet secondaire incluse dans la première requête (180), dans lequel elle n'influence pas une sortie de la première requête (180) si l'étape d'effet secondaire est exécutée, et
la conservation du contenu de l'instruction de base comprend : la conservation de l'étape d'effet secondaire dans la deuxième requête (190).

5. Procédé (200 ; 500) selon la revendication 1, dans lequel la traduction de la première requête (180) en la deuxième requête (190) comprend :

la détermination du fait que la première requête (180) implique ou non une pluralité de sous-parcours ; et
en réponse à la détermination que la première requête (180) implique la pluralité de sous-parcours, la traduction de la pluralité de sous-parcours dans la première requête (180) en une pluralité de sous-parcours dans la deuxième requête (190), la pluralité de sous-requêtes produisant chacune en sortie le même nombre de colonnes.

6. Procédé (200; 500) selon la revendication 1, dans lequel la traduction (204) de la première requête (180) en la deuxième requête (190) comprend :
la détermination du nombre de colonnes produites en sortie par la deuxième requête (190) sur la base d'une instruction SELECT dans la deuxième requête (190).

7. Procédé (200 ; 500) selon la revendication 1, dans lequel la traduction (204) de la première requête (180) en la deuxième requête (190) comprend :

la génération d'un état dans une machine à états finis (FSM) sur la base d'une étape dans la première requête (180) ; et
la génération de la deuxième requête (190) sur la base de l'état dans la FSM.

8. Procédé (200 ; 500) selon la revendication 1, dans lequel le langage de parcours de graphe fonctionnel (410) est un langage Gremlin, et dans lequel le SQL étendu (420) est une version étendue d'un SQL standard.

9. Dispositif électronique (100) pour identifier des requêtes avec la même sémantique dans un langage de parcours de graphe fonctionnel (410), le dispositif électronique (100) comprenant :

une unité de traitement (110) ;
une mémoire (120) couplée à l'unité de traitement (110) et stockant des instructions, les instructions, lorsqu'elles sont exécutées par l'unité de traitement (110), exécutant les actes suivants :

l'obtention (202) d'une première requête (180) dans le langage de parcours de graphe fonctionnel (410), la première requête (180) impliquant une arête dirigée (311, 312, 313, 321, 331) décrivant une relation de voisinage entre des sommets (310, 320, 330, 340) dans un graphe (300) ; et
la traduction (204) de la première requête (180) en une deuxième requête (190) dans un langage de requête structuré (SQL) étendu (420), la deuxième requête (190) incluant une clause décrivant l'arête dirigée (311, 312, 313, 321, 331) ;
l'obtention (502) d'une troisième requête (185) dans le langage de parcours de graphe fonctionnel ;
la traduction (504) de la troisième requête (185) en une quatrième requête dans le SQL étendu (420) ;
la détermination (506) du fait que la deuxième requête (190) et la quatrième requête présentent ou non le même plan d'exécution ; et
en réponse à la détermination (506) que la deuxième requête (190) et la quatrième requête présentent un même plan d'exécution, la détermination (508) que la première requête (180) et la troisième requête (185) présentent une même sémantique.

10. Dispositif électronique selon la revendication 9, les actes comprenant en outre l'optimisation des requêtes dans le langage de parcours de graphe fonctionnel par :

la comparaison (510) d'une efficacité d'exécution de la troisième requête (185) à une efficacité d'exécution de la première requête (180) ; et
en réponse à la détermination que l'efficacité d'exécution de la troisième requête (185) est supérieure à l'efficacité d'exécution de la première requête (180), le remplacement (512) de la première requête (180) par la troisième requête (185) ; ou
en réponse à la détermination que l'efficacité d'exécution de la troisième requête (185) est inférieure à l'efficacité d'exécution de la première requête (180), l'utilisation (514) de la première requête (180) pour remplacer la troisième requête (185).

11. Dispositif électronique (100) selon la revendication 9, dans lequel la traduction de la première requête (180) en la deuxième requête (190) comprend :

l'identification d'une instruction de base dans un langage de commande inclus dans la première requête (180) ; et
la conservation du contenu de l'instruction de base dans la deuxième requête (190) à l'aide d'une fonction table, la fonction table étant une fonction définie par l'utilisateur qui est capable de définir une entrée et le nombre de colonnes de sortie.

12. Dispositif électronique (100) selon la revendication 11, dans lequel :

l'identification d'une instruction de base dans le langage de commande comprend : l'identification d'une étape d'effet secondaire incluse dans la première requête (180), dans lequel elle n'influence pas une sortie de la première requête (180) si l'étape d'effet secondaire est exécutée, et
la conservation du contenu de l'instruction de base comprend : la conservation de l'étape d'effet secondaire dans la deuxième requête (190).

13. Dispositif électronique (100) selon la revendication 9, dans lequel la traduction de la première requête (180) en la deuxième requête (190) comprend :

la détermination du fait que la première requête (180) implique ou non une pluralité de sous-parcours ; et
en réponse à la détermination que la première requête (180) implique la pluralité de sous-parcours, la traduction de la pluralité de sous-parcours dans la première requête (180) en une pluralité de sous-parcours dans la deuxième requête (190), la pluralité de sous-requêtes produisant chacune en sortie le même nombre de colonnes.

14. Produit de programme informatique stocké sur un support lisible par ordinateur et incluant des instructions exécutables par ordinateur, les instructions exécutables par ordinateur, lorsqu'elles sont exécutées, amenant l'ordinateur à identifier des requêtes avec la même sémantique dans un langage de parcours de graphe fonctionnel (410) par :

l'obtention (202) d'une première requête (180) dans le langage de parcours de graphe fonctionnel (410), la première requête (180) impliquant une arête dirigée (311, 312, 313, 321, 331) décrivant une relation de voisinage entre des sommets (310, 320, 330, 340) dans un graphe (300) ; et

la traduction (204) de la première requête (180) en une deuxième requête (190) dans un langage de requête structuré (SQL) étendu (420), la deuxième requête (190) incluant une clause décrivant l'arête dirigée (311, 312, 313, 321, 331) ;

l'obtention (502) d'une troisième requête (185) dans le langage de parcours de graphe fonctionnel (410) ;

la traduction (504) de la troisième requête (185) en une quatrième requête dans le SQL étendu (420) ;

la détermination (506) du fait que la deuxième requête (190) et la quatrième requête présentent ou non le même plan d'exécution ; et

en réponse à la détermination (506) que la deuxième requête (190) et la quatrième requête présentent un même plan d'exécution, la détermination (508) que la première requête (180) et la troisième requête (185) présentent une même sémantique.

15. Produit de programme informatique selon la revendication 14, dans lequel les instructions exécutables par ordinateur, lorsqu'elles sont exécutées, amènent en outre l'ordinateur à optimiser les requêtes dans le langage de parcours de graphe fonctionnel par :

la comparaison (510) d'une efficacité d'exécution de la troisième requête (185) à une efficacité d'exécution de la première requête (180) ; et

en réponse à la détermination que l'efficacité d'exécution de la troisième requête (185) est supérieure à l'efficacité d'exécution de la première requête (180), le remplacement (512) de la première requête (180) par la troisième requête (185) ; ou

en réponse à la détermination que l'efficacité d'exécution de la troisième requête (185) est inférieure à l'efficacité d'exécution de la première requête (180), l'utilisation (514) de la première requête (180) pour remplacer la troisième requête (185).

**FIG. 1**

200

202

OBTAIN A FIRST QUERY IN A FUNCTIONAL GRAPH
TRAVERSAL LANGUAGE

204

TRANSLATE THE FIRST QUERY TO A SECOND QUERY
IN AN EXTENDED STRUCTURED QUERY LANGUAGE

**FIG. 2**

FIG. 3

FIG. 4

```
                    ┌─ 500                                                    ┌─ 502
                    ▼
          ┌─────────────────────────────────────────────────┐
          │   OBTAIN A THIRD QUERY IN FUNCTIONAL GRAPH       │
          │            TRAVERSAL LANGUAGE                    │
          └─────────────────────────────────────────────────┘
                              │
                              ▼                                              ┌─ 504
          ┌─────────────────────────────────────────────────┐
          │  TRANSLATE THE THIRD QUERY TO A FOURTH QUERY     │
          │   IN EXTENDED STRUCTURED QUERY LANGUAGE          │
          └─────────────────────────────────────────────────┘
                              │
                              ▼                                        ┌─ 506
                        ╱─────────────╲
                   ╱   SECOND QUERY AND   ╲              N
                 ◄   FOURTH QUERY HAVE SAME   ►──────────────────┐
                   ╲   EXECUTION PLAN?     ╱                      │
                        ╲─────────────╱                          │
                              │ Y                                │
                              ▼                          ┌─ 508  │
          ┌─────────────────────────────────────────────────┐   │
          │  DETERMINE THAT THE FIRST QUERY AND THE THIRD    │   │
          │      QUERY HAVE THE SAME SEMANTICS               │   │
          └─────────────────────────────────────────────────┘   │
                              │                                  │
                              ▼               ┌─ 510             │
                        ╱─────────────╲                          │
              N    ╱    THIRD QUERY      ╲                       │
          ┌──────◄  HAVING HIGHER EXECUTION ►                    │
          │        ╲    EFFICIENCY?      ╱                       │
          │             ╲─────────────╱                         │
          │                   │ Y                               │
          │                   ▼                        ┌─ 512   │
          │  ┌─────────────────────────────────────────────┐   │
          │  │  REPLACE THE FIRST QUERY WITH THE THIRD QUERY│   │
          │  └─────────────────────────────────────────────┘   │
          │                   │                                 │
          │                   ▼                        ┌─ 514   │
          └─►┌─────────────────────────────────────────────┐   │
             │  REPLACE THE THIRD QUERY WITH THE FIRST QUERY│   │
             └─────────────────────────────────────────────┘   │
                                                        ┌─ 516  │
             ┌─────────────────────────────────────────────┐   │
             │ DETERMINE THAT THE FIRST QUERY AND THE THIRD │◄──┘
             │     QUERY HAVE DIFFERENT SEMANTICS           │
             └─────────────────────────────────────────────┘
```

**FIG. 5**

$600$

**FUNCTIONAL GRAPH TRAVERSAL LANGUAGE** — 410

— 615

```
g.V().has('name', 'John').store('x').has('age', gt(20)).cap('x')
```

STANDARD STRUCTURED QUERY LANGUAGE — 620

— 625

```
SELECT ALL N_20.value
FROM Node AS [N_18],
      CROSS APPLY Store('x', N_18.*) AS [N_19]
      CROSS APPLY Cap('x', '*') AS [N_20]
WHERE N_18.name = 'John' AND N_18.age > 20
```

EXTENDED STRUCTURED QUERY LANGUAGE — 420

— 635

```
SELECT ALL N_20.value
FROM Node AS [N_18],
      CROSS APPLY Store('x', N_18.*) AS [N_19]
      CROSS APPLY Filter(CASE WHEN N_18.age > 20 THEN N_19.value) AS [N_22]
      CROSS APPLY Cap('x', '*') AS [N_20]
WHERE N_18.name = 'John'
```

**FIG. 6**

700

FUNCTIONAL GRAPH TRAVERSAL LANGUAGE — 410

g.V(1).coalesce(__.outE('knows'), __.outE('created')) — 715

EXTENDED STRUCTURED QUERY LANGUAGE — 420

725

```
SELECT ALL E_8.* AS value
FROM Node AS N_18
CROSS APPLY Coalesce(
     (
     SELECT ALL E_6.* AS *
     FROM CROSS APPLY VertexToForwardEdge(N_18.*, 'label', '*') AS [E_6]
     WHERE E_6.label = 'knows'),
     (
     SELECT ALL E_7.* AS *
     FROM CROSS APPLY VertexToForwardEdge(N_18.*, 'label', '*') AS [E_7]
     WHERE E_7.label = 'created')
) AS [E_8]
WHERE N_18.id = 1
```

**FIG. 7**

EP 3 746 908 B1

800

410

FUNCTIONAL GRAPH TRAVERSAL LANGUAGE

815

g.V().optional(__.out()).values('name')

420

EXTENDED STRUCTURED
QUERY LANGUAGE

825

```
SELECT ALL R_0.value
FROM node AS [N_18], CROSS APPLY Optional(
(
    SELECT ALL N_18.name AS name
    UNION ALL
    SELECT ALL N_19.name AS name
    FROM CROSS APPLY VertexToForwardEdge(N_18.*, '*') AS [E_6],
        CROSS APPLY EdgeToSinkVertex(E_6.*, 'name') AS [N_19])
) AS [N_20], CROSS APPLY Values(N_20.name) AS [R_0]
```

**FIG. 8**

900

### 410
**FUNCTIONAL GRAPH TRAVERSAL LANGUAGE**

### 915
g.V().out().has('name', 'Jeff').out()

### 920
**FINITE STATE MACHINE**

X — e1 → Y — e2 → Z

name=Jeff

### 420
**EXTENDED STRUCTURED QUERY LANGUAGE**

### 935
```
SELECT Z.*
FROM X, Y, Z
MATCH X - e1 -> Y - e2 -> Z
WHERE Y.name='Jeff'
```

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160342709 A1